Europäisches Patentamt

European Patent Office

Office européen des brevets

(19)

(11) **EP 1 280 338 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.⁷: **H04N 5/12**

(21) Anmeldenummer: **02016048.7**

(22) Anmeldetag: **19.07.2002**

(54) **Verfahren und Anordnung zur Umwandlung analoger Bildsignale in digitale Bildsignale durch Nachstellen der Phase des Abtastsignals**

Method and arrangement for converting analog picture signals in digital picture signals by adjusting the phase of the sampling signal

Méthode et système de conversion d' un signal d' image analogique en un signal d'image numérique basés sur la régulation de la phase du signal d' échantillonage

(84) Benannte Vertragsstaaten:
**AT BE BG CH CY CZ DE DK EE ES FI FR GB GR IE IT LI LU MC NL PT SE SK TR**

(30) Priorität: **27.07.2001 DE 10136677**

(43) Veröffentlichungstag der Anmeldung:
**29.01.2003 Patentblatt 2003/05**

(73) Patentinhaber: **Harman/Becker Automotive Systems (XSYS Division) GmbH 78050 Villingen-Schwenningen (DE)**

(72) Erfinder: **Frensch, Jochen 78052 Villigen-Schwenningen (DE)**

(74) Vertreter: **Patentanwälte Westphal, Mussgnug & Partner Am Riettor 5 78048 Villingen-Schwenningen (DE)**

(56) Entgegenhaltungen:
**EP-A- 0 756 417      EP-A- 0 918 313 US-A- 6 097 444**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren und eine Anordnung zur Umwandlung analoger Bildsignale in digitale Bildsignale.

Aus der EP-A-0756417 ist ein Verfahren zur Umwandlung analoger Bildsignale in digitale Bildsignale bekannt, bei dem als analoges Bildsignal ein Testsignal vorgesehen ist, welches aus einer vorgegebenen Anzahl von eine Bildzeile wiedergebenden Pixeln besteht. Daraus wird ein digitales Bildsignal mit fester Länge sowie Horizontal-Synchronisiersignal gewonnen. Aus einer Testzeile des digitalen Bildes wird die Phasenlage des Abtastsignals ermittelt. In Abhängigkeit von der ermittelten Phasenlage wird gegebenenfalls die Phasenlage verändert.

Die EP-A-0918313 ofenbart ein hierzu alternatives Verfahren, bei der die optimale Phasenlage berechnet wird. Dabei wird das analoge Bildsignal nacheinander mit unterschiedlichen Phasenlagen des Abtastsignals abgetastet, um die optimale Phasenlage zu bestimmen.

Zur Darstellung eines analogen RGB-Bildes auf einem digitalen Display ist eine Analog-Digital-Wandlung erforderlich. Hierbei ist die Qualität der Bilddarstellung wesentlich davon abhängig, dass diese Wandlung pixelgenau erfolgt. Anderenfalls werden feine senkrechte Linienstrukturen nur unzureichend wiedergegeben. Falls die Abtastfrequenz nicht der Pixelfrequenz entspricht, können durch Abtastung ausserhalb der minimalen und maximalen Bildsignalwerte falsche Minima und Maxima erkannt werden, die weder in ihrem Betrag noch in ihrer Phase mit den tatsächlichen Werten übereinstimmen.

Aber auch in dem Fall, dass die Abtastfrequenz der Pixelfrequenz entspricht, ist die Wahl der Abtastphase nicht unproblematisch. Fehler in der Wahl der Abtastphase zeigen sich am deutlichsten bei Bildern mit scharfen vertikalen Kanten, wie sie z.B. bei Navigationskarten u.s.w. auftreten. Die Ab-Abtastung einer Testzeile mit alternierenden schwarzen und weissen Pixeln kann somit zur Beurteilung einer gewählten Phasenlage herangezogen werden. Falls - im Extremfall - die Phasenlage genau zwischen den Minima und Maxima liegt, werden bei einer gleichmässig periodischen Testzeile - z.B. einer Sinuskurve - übereinstimmende Grautöne ermittelt und somit die Testzeile als graue Zeile wiedergegeben.

Um derartige Probleme gering zu halten, werden zum einen die Synchronisationssignale, die den Zeitpunkt der Abtastung bestimmen, dem eigentlichen RGB-Signal aufmoduliert, um Laufzeitunterschiede zwischen Bildinhalt und Steuersignalen zu minimieren. Weiterhin werden die von der Quelle erzeugten Zeilen mit einer genau definierten Anzahl an Pixeln generiert, so dass es dem Empfangsmodul möglich ist, durch entsprechende Vervielfachung der Zeilenfrequenz die genaue Pixelfrequenz zu regenerieren. Zur Auswahl der Phasenlage zwischen rückgewonnenem Synchronisationssignal und RGB-Signal durch das Empfangsmodul wird von der Quelle ein definiertes Testsignal eingestanzt, das vorzugsweise einen Wechsel zwischen maximaler und minimaler RGB-Amplitude von einem Pixel zum nächsten - d.h. eine alternierende Folge von weißen und schwarzen Pixeln - beinhaltet.

Da die Abtastfrequenz aufgrund der Kenntnis der exakten Pixelanzahl pro Zeile und einer entsprechenden Vervielfachung der Zeilenfrequenz durch einen phasengerasteten Regelkreis (PLL) erzeugt wird, muss aus dem Abtastsignal noch die optimale Abtastphase bestimmt werden.

Der Erfindung liegt dementsprechend die Aufgabe zugrunde, ein Verfahren und eine Anordnung zur Umwandlung analoger Bildsignale in digitale Bildsignale zu schaffen, mit denen eine genaue Ermittlung der Phasenlage zwischen rückgewonnenem Synchronisationssignal und RGB-Signal mit vorteilhafterweise relativ geringem Aufwand möglich ist.

Diese Aufgabe wird durch ein Verfahren nach Anspruch 1 und eine Anordnung nach Anspruch 12 gelöst. Die Unteransprüche beschreiben bevorzugte Weiterbildungen.

Der Erfindung liegt der Gedanke zugrunde, die tatsächliche Phasenlage des RGB-Signals durch eine feinere Abtastung mit unterschiedlichen Phasenlagen und eine qualitative Auswertung der Messwerte durch Bildung geeigneter Parameter zu ermitteln. Hierzu wird eine Abtastung der Pixel einer Testzeile mit vorzugsweise alternierend weißen und schwarzen Pixeln mit einer Frequenz vorgenommen, die ein n-faches der Pixelfrequenz ist. Hierdurch werden zu jedem Pixel n Abtastwerte mit festen Phasenlagen gewonnen. Die Ermittlung der Parameter zu den einzelnen Phasenlagen erfolgt durch Differenzbildung der Messwerte benachbarter Pixel und Summation dieser Differenzen. Diese Parameter enthalten somit Informationen zu der relativen Phasenlage zwischen rückgewonnenem Synchronisationssignal und RGB-Signal, die nachfolgend ausgewertet werden können.

Um einem Hsync-Jitter, d.h. einer Phasenschwankung des Hsynch-Signals, entgegenzuwirken und dennoch den Abtastzeitpunkt auf den Bruchteil einer Abtastperiode genau zu ermitteln, wird vorteilhafterweise nicht nur die Testzeile zur Kalibrierung verwendet, sondern mehrere Zeilen. Dies kann insbesondere durch eine Tiefpassfilterung erfolgen.

Erfindungsgemäß kann eine Nachregelung des Abtastzeitpunktes unterbleiben, wenn erkannt wird, das kein Bild mit relevanten vertikalen scharfen Linien vorliegt und somit die eingangs genannten Probleme nicht relevant sind.

Das erfindungsgemäße Verfahren kann insbesondere mit 2-facher oder 3-facher Überabtastung durchgeführt werden. Jedes Pixel wird hierdurch in 2 oder 3 Phasenbereiche unterteilt, die jeweils durch ein Phasenregister beschrieben werden, wobei bei einer Nachregelung entsprechend der Phasenregisterwert der Abtastphase schrittweise erhöht oder verringert wird.

Die Erfindung wird im folgenden anhand der beiliegenden Zeichnungen an einigen Ausführungsformen näher erläutert. Es zeigen:

Figur 1 ein Zeitdiagramm eines Messsignals gemäß einer ersten Ausführungsform der Erfindung mit 2-facher Überabtastung;

Figur 2 ein Zeitdiagramm eines Messsignals gemäß einer weiteren Ausführungsform der Erfindung mit 3-facher Überabtastung;

Figur 3 den Aufbau einer erfindungsgemäßen Anordnung zur Durchführung des erfindungsgemäßen Verfahrens;

Figur 4 ein Flussdiagramm eines erfindungsgemäßen Verfahrens gemäß einer Ausführungsform der Erfindung;

Figur 5 ein Flussdiagramm eines erfindungsgemäßen Verfahrens gemäß einer weiteren Ausführungsform der Erfindung.

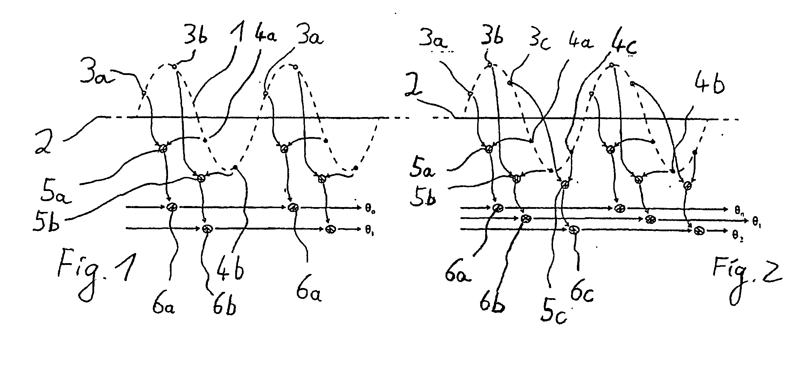

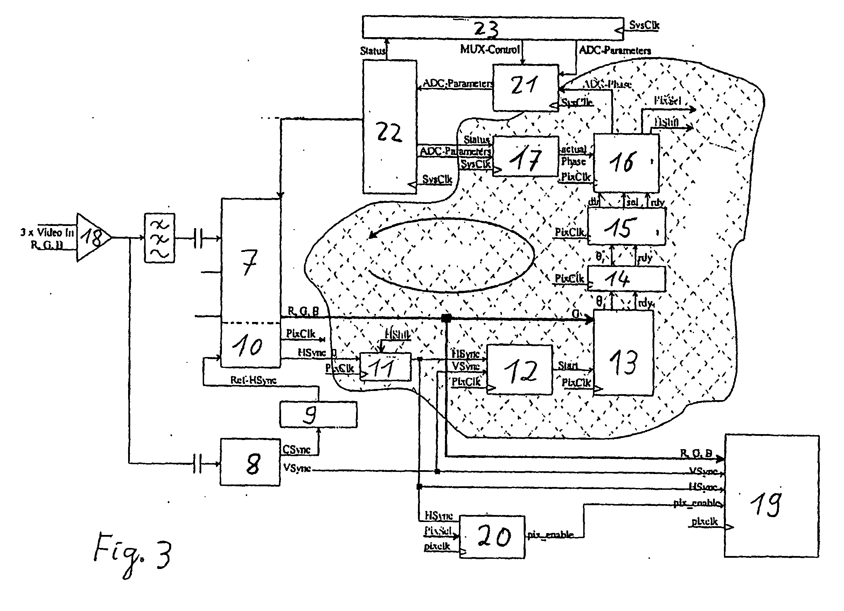

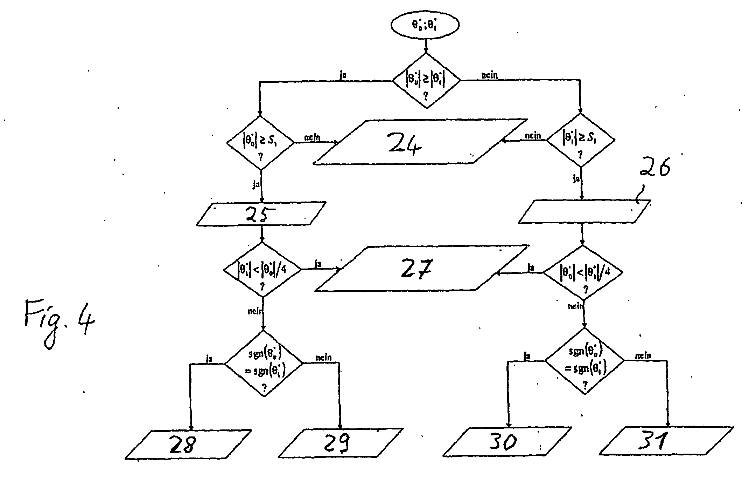

Gemäß Figur 3 werden analoge Bildsignale über eine Eingangsschaltung einem Analog-Digital-Wandler 7 sowie einem Synchronisationsseparator 8 eingegeben. Von dem Synchronisationsseparator 8 wird über ein Schnittstellen-Filter 9 ein Referenz-Horizontal-Synchronisationssignal Ref-HSynch gebildet, das einem PLL (phasengerasteten Regelkreis) 10 eingegeben wird. Der PLL 10 bildet hieraus und mit Kenntnis der Pixelzahl pro Zeile ein Pixel-Taktsignal PixClk und ein Horizontalsynchronisationssignal Hsync. Der Analog-Digital-Wandler 7 gibt ein digitales Bildsignal RGB an eine Bildbearbeitungseinrichtung 14 und das Grünsignal G hiervon an eine Auswerteeinrichtung 13 weiter. Über eine Einstelleinrichtung 11 zum Verschieben des Horizontal-Synchronisationssignals Hsynch in Abhängigkeit von einem Horizontal-Verschiebesignal HShft wird das Horizontal-Synchronisationssignal Hsynch einer Detektionseinrichtung 12 zur Feststellung eines Beginns einer Testzeile zugeführt. Die Detektionseinrichtung 12 gibt ein Startsignal Start an die Auswerteeinrichtung 13 ein, die weiterhin neben dem GrünSignal G das Pixel-Taktsignal PixClk aufnimmt. In der Auswerteeinrichtung 13 werden Phasenparameter $\theta_i$ berechnet, aus denen in einem nachfolgenden Filter 14 durch eine Mittelung über mehrere Zeilen gemittelte Phasenparameter $\theta^*_i$ berechnet werden, die in einer nachfolgenden Signalphasenbestimmungseinrichtung 15 zur Bestimmung der Phasenlage herangezogen werden, wobei diese Phasenlage wiederum in einer nachfolgenden Einrichtung zum Erzeugen einer A/D-Wandler-Phase 16 mit einer derzeit eingestellten Phasenlage des Analog-Digital-Wandlers verglichen wird, woraus unter anderem das Horizontal-Verschiebesignal HShft und eine geänderte Phasenlage der Analog-Digital-Wandlung festgelegt wird. Weitere Schaltungskomponenten 17, 21, 22, 23 dienen der genauen Nachregelung und als Schnittstelle mit einem Mikroprozessor.

In der Auswerteeinrichtung 13 werden die Zeilen der digitalen Grün-Bildsignale G mit einer n-fachen Pixelfrequenz ausgelesen. Aus einer Testzeile, die vorzugsweise die letzte Zeile vor dem aktiven Bild ist und alternierend weiße und schwarze Pixel aufweist, werden pro Pixel n Messwerte abgetastet. In Figur 1 ist hierzu ein Beispiel mit n=2 und in Figur 2 ein Beispiel mit n=3 gezeigt. In der Detektionseinrichtung 12 wird hierbei der Anfang der Testzeile festgestellt und ein Startsignal Start an die Auswerteeinheit ausgeben.

Durch die Vielfachabtastung werden von jedem Pixel n Messwerte bei jeweils sich entsprechenden Phasenlagen gewonnen. Grundlage des Verfahrens ist es, dass jeweils Messwerte gleicher Phasenlagen von weißen und schwarzen Pixeln voneinander subtrahiert werden und diese Differenzen über die gesamte Testzeile zu Phasenparametern $\theta_i$ aufsummiert werden. Vorteilhafterweise werden hierzu die Messwerte benachbarter Pixel voneinander subtrahiert.

Grundsätzlich kann erfindungsgemäß bereits aus diesen Phasenparametern die Phasenlage der Abtastung bestimmt werden. Dese Phasenlage ist dann für die Testzeile optimiert. Problematisch ist jedoch weiterhin die allgemein als Jitter bezeichnete Phasenverbreiterung des HSync-Signals. Zwar wird durch die PLL zur Regenerierung des Pixel-Taktsignals diesem Jitter bereits entgegengewirkt, da jedoch andererseits der Abtastzeitpunkt auf den Bruchteil einer Abtastperiode abgeglichen werden soll, ist es sinnvoll, nicht nur die aktuelle Testzeile zur Kalibrierung zu verwenden, sondern über mehrere Zeilen zu mitteln. Diese Mittelung kann insbesondere unter Einbeziehung von Zeilen des aktiven Bildes vorgenommen werden, wodurch ein über das aktive Bild gemittelter otimierter Abtastzeitpunkt bestimmt wird.

Diese Mittelung erfolgt durch Tiefpassfilterung. Hierzu eignet sich insbesondere ein FIR-Filter N-ter Ordnung, dessen Koeffizienten alle 1 sind, d.h.

$$H_1(z) = \sum_{i=0}^{N} z^{-i} = \frac{1 - z^{-(N+1)}}{1 - z^{-1}}$$

Dieses Filter kann auch z.B. mit N=15 implementiert werden. Ein relativ geringer Realisierungsaufwand kann durch IIR-Filter erreicht werden. Hierbei kann insbesondere eine Realisierung gewählt werden mit der Form

$$H_2(z) = = \frac{1 + z^{-1}}{1 - (1 - 2^p) z^{-1}}.$$

Aus den $\theta^*_i$ kann nun mathematisch die aktuelle Phasenlage ermittelt und entsprechend die Abtastphase des A/D-Wandlers korrigiert werden.

Da der Implementationsaufwand, insbesondere für mathematische Operationen wie Division und arctan-Bildung jedoch relativ hoch ist und das analoge Vorfilter so ausgebildet sein müsste, dass das analysierte Testsignal bereits hinreichend genau einer Sinuskurve entspricht, kann das Verfahren stark vereinfacht werden. Zwar dauert in diesem Fall die Nachregelung etwas länger; dies ist jedoch in der Regel unproblematisch, da bei einer schon gut eingestellten Abtastphase nur selten eine Nachregelung erforderlich ist.

Bei diesem vereinfachten Verfahren wird lediglich bestimmt, ob und gegebenenfalls in welche Richtung die Abtastphase angepasst werden muß. Die Nachregelung erfolgt dann in vom A/D-Wandler 7 vorgegebenen minimalen Schrittweisen mittels eines Phasenregisters.

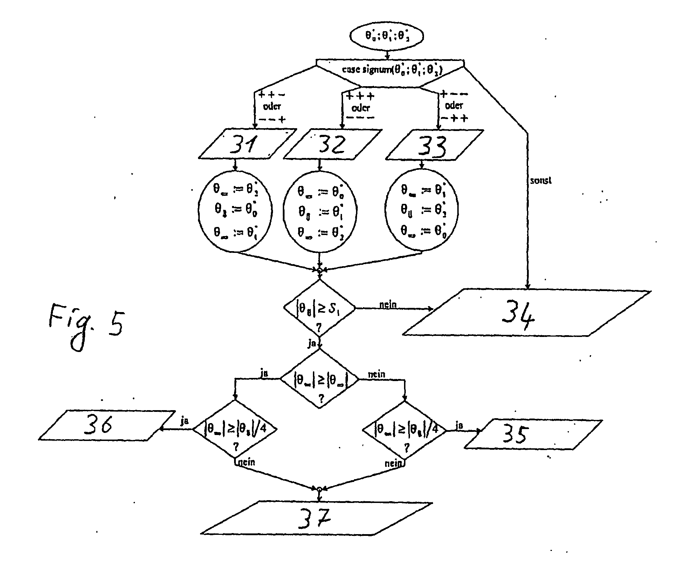

Die Auswertung der gemittelten Phasenparameter $\theta^*_i$ erfolgt somit in folgenden Schritten, die in den Figuren 4 und 5 für die Fälle n=2 und n=3 gezeigt sind:

   1. Es wird beurteilt, ob ein Bild mit scharfen vertikalen Linien vor liegt. Falls nicht, werden alle momentan getroffenen Einstellungen beibehalten.

   2. Falls ein derartiges Bild mit scharfen vertikalen Linien vorliegt, wird beurteilt, welche Abtastphase die beste ist.

   3. Es wird beurteilt, ob eine Nachjustierung der Abtastphase erforderlich ist.

   4. Falls eine Nachjustierung erforderlich ist, wird entschieden, in welche Richtung die Phasenlage geändert wird.

Bei der Ausführungsform der Figur 4 mit n=2 wird zunächst durch einen Vergleich der Beträge der gemittelten Phasenparameter ermittelt, welche der beiden Phasenlagen die Maxima und Minima der als Sinuskurve angenommenen (Grün-) Bildsignalkurve 1 des Messsignals besser trifft. Als bessere Phasenlage wird hierbei der vom Betrag her größere Phasenparameter genommen. Anschließend wird der bessere Phasenparameter mit einem Grenzwert S verglichen und bei Unterschreiten des Grenzwerts in Schritt 24 entschieden, dass in dem Bild keine relevanten scharfen vertikalen Linien bzw. nicht genug derartige Linien auftreten und somit kein Regelungsbedarf vorliegt.

Andernfalls wird in den Schritten 25, 26 die Phasenlage als beste gewählt, deren gemittelter Phasenparameter vom Betrag her höher ist. Nachfolgend wird durch einen quantitativen Vergleich eines Viertels des Betrages des gewählten besseren gemittelten Phasenparameters mit dem Betrag des anderen gemittelten Phasenparameters entschieden, ob die Phasenlage bereits hinreichend optimiert ist. In diesem Fall wird in Schritt 27 entschieden, dass die Phasenlage nicht geändert wird. In dem anderen Fall wird die Abtastphase weiter optimiert, indem die Vorzeichen der Phasenparameter verglichen werden und bei Übereinstimmung die Abtastphase in den Schritten 28 und 31 (wenn die erste Abtastung gewählt ist und die Vorzeichen gleich sind oder wenn die zweite Abtastung gewählt ist und die Vorzeichen ungleich sind) um einen vorgegebenen Wert nach rechts und in den anderen Fällen in den Blöcken 29 und 30 entsprechend um einen vorgegebenen Wert nach links verschoben wird.

Bei der Ausführungsform der Figur 5 mit n=3 wird zunächst das Vorzeichen der gemittelten Phasenparameter $\theta^*_i$ ermittelt und in den angegebenen Fällen gemäß Block 31 (wenn die Vorzeichen der ersten beiden Abtastungen gleich und verschieden von der dritten Abtastung sind) die erste Abtastung, gemäß Block 32 (wenn alle Vorzeichen gleich sind) die zweite Abtastung und gemäß Block 33 (wenn die Vorzeichen der letzten beiden Abtastungen gleich und verschieden von der ersten Abtastung sind) die dritte Abtastung gewählt. In anderen Fallen wird gemäß Block 34 darauf erkannt, dass kein relevantes Bild mit scharfen vertikalen Kanten vorliegt und keine Änderung vorgenommen. Anschließend wird in den ersten drei Fällen wiederum überprüft, ob der Betrag des Phasenparameters der besten

Abtastung $|\theta^*\Downarrow|$ einen vorgegebenen Grenzwert S erreicht oder überschreitet. Falls dies nicht der Fall ist, wird wieder gemäß Block 34 keine Änderung vorgenommen.

Falls eine Änderung vorgenommen werden soll, werden die Beträge der (gemittelten) Phasenparameter der darauffolgenden Abtastung $|\theta^*_{\rightarrow}|$ und der vorherigen Abtastung $|\theta^*_{\leftarrow}|$ verglichen und der kleinere Wert wiederum mit einem Viertel des Betrages des Phasenparameters der besten Abtastung verglichen. Falls der kleinere Wert diesen Betrag unterschreitet, wird gemäß Block 27 die Phasenlage nicht geändert, ansonsten erfolgt eine Verschiebung in Block 36 (falls der Betrag des vorherigen Phasenparameters größer als derjenige des nachfolgenden Phasenparameters ist) nach rechts und im anderen Fall in Block 35 nach links.

Für den Phasenregister kann z.B. eine fünfstellige Digitalzahl mit Werten zwischen 0 und 31 verwendet werden. Das Phasenregister wird entsprechend der obigen Anweisung um 1 erhöht oder verringert. Bei den Übergängen $0 \rightarrow 31$ und $31 \rightarrow 0$ ist zu beachten, dass hierbei der Phasenbereich der jeweiligen Abtastung verlassen wird und die entsprechende benachbarte Abtastung gewählt wird. Somit ist bei n=2 und n=3 von dem Wert 31 der ersten Abtastung bei einer Erhöhung um 1 der Wert 0 der zweiten Abtastung zu nehmen. Bei einem Wert 31 der zweiten Abtastung ist bei einer Erhöhung um 1 der Wert 0 der dritten Abtastung zu nehmen. Bei einem Wechsel von der zweiten zur ersten Abtastung (bei n=2) und von der dritten zur ersten Abtastung (bei n=3) wird zudem das nächste Pixel gewählt. Dies wird durch die Einstelleinrichtung 11 zum Verschieben des Hsync-Dignals berücksichtigt. Über das Signal HShft wird dieser dazu veranlasst, das Hsync-Dignal füralle eingangsseitig um 0, 1, und 2 PixelClock-Takte zu verzögern; der Startwert nach einem Reset ist immer 1. Hierdurch wird zum einen eine negative Verschiebung erreicht und zum anderen bewirkt, dass beim nächsten Frame der Algorithmus ein Ergebnis liefert, das im unkritischen Bereich liegt, da alle Abtastwerte um einen PixelClock-Takt verschoben sein werden. Dies entspricht einem Regelbereich von der Dauer eines vollständigen Pixels.

Tabellarisch ergibt sich somit:

| Bei n=2: | | |
|---|---|---|
| A/D-Phasenübergang | bei 1. Abtastung | bei 2. Abtastung |
| $0 \rightarrow 31$ | $\rightarrow$ 2. Abtastung HShift +1 | $\rightarrow$ 1. Abtastung HShift 0 |
| $31 \rightarrow 0$ | $\rightarrow$ 2. Abtastung HShift 0 | $\rightarrow$ 1. Abtastung HShift -1 |

| Bei n=3: | | | |
|---|---|---|---|
| A/D-Phasen-Übergang | 1. Abtastung | 2. Abtastung | 3. Abtastung |
| $0 \rightarrow 31$ | $\rightarrow$ 3. Abtast. HShift +1 | $\rightarrow$ 1. Abtast. HShift 0 | $\rightarrow$ 2. Abtast. HShift 0 |
| $31 \rightarrow 0$ | $\rightarrow$ 2. Abtast. HShift 0 | $\rightarrow$ 3. Abtast. HShift 0 | $\rightarrow$ 1. Abtast. HShift -1 |

**Patentansprüche**

1. Verfahren zur Umwandlung analoger Bildsignale in digitale Bildsignale, das folgende Schritte aufweist:

   a) aus einem analogen Bildsignal und einer vorgegebenen Anzahl von Pixeln pro Zeile wird ein digitales Bildsignal (RGB), ein Horizontal-Synchronisationssignal (Hsynch) und ein Pixel-Taktsignal (pixclk) gewonnen,
   b) aus einer Testzeile des digitalen Bildsignals wird eine Phasenlage ermittelt, indem

   b1) in einer eingestellten Phasenlage die Testzeile mit einer Abtastfrequenz abgetastet wird, die ein n-faches der Pixelfrequenz ist, und zu jedem Pixel bei n Phasenlagen ein erster bis n-ter Messwert des Bildsignals ermittelt wird,
   b2) von zwei benachbarten Pixeln jeweils Differenzen der ersten bis n-ten Messwerte gebildet und über die Testzeile zu ersten bis n-ten Phasenparametern ($\theta_i$, i=1-n) aufsummiert werden,
   b3) aus den Phasenparametern die Phasenlage ermittelt wird, wobei eine Mittelung der Phasenparameter (θi, i=1-n) über mehrere Zeilen durchgeführt wird und gemittelte Phasenparameter (θ*ik) gebildet werden, aufgrund dieser Mittelung beurteilt wird, ob ein Bild mit scharfen vertikalen Kanten vorliegt und

c) in Abhängigkeit der ermittelten Phasenlage erfolgt eine Änderung der eingestellten Phasenlage, wobei bei Nichtvorliegen eines Bildes mit scharfen vertikalen Kanten keine Änderung der eingestellten Phasenlage erfolgt.

2. Verfahren nach Anspruch 1, **dadurch gekennzeichnet, dass** die Testzeile eine alternierende Folge aus hellen und dunklen Pixeln aufweist.

3. Verfahren nach einem der vorherigen Ansprüche, **dadurch gekennzeichnet, dass** ein Phasenbereich jeder Abtastung durch ein Phasenregister beschrieben wird und eine Änderung der Phasenlage erfolgt, indem das Phasenregister um einen vorgegebenen Wert, vorzugsweise 1, erhöht oder verringert wird.

4. Verfahren nach Anspruch 3, **dadurch gekennzeichnet, dass** bei Überschreiten eines Maximalwertes des Phasenregisters oder Unterschreiten eines Minimalwertes des Phasenregisters die entsprechende benachbarte Abtastung gewählt wird.

5. Verfahren nach einem der vorherigen Ansprüche, **dadurch gekennzeichnet, dass** die Mittelung über die mehreren Zeilen durch einen Tiefpass, insbesondere einen FIR-Tiefpass erfolgt.

6. Verfahren nach Anspruch 5, **dadurch gekennzeichnet, dass** die Phasenparameter (θ*ik) ermittelt werden als eine Summe einzelner Phasenparameter (θkj, i=1-n, j=0-m-1).

7. Verfahren einem der vorherigen Ansprüche, **dadurch gekennzeichnet, dass** die Abtastfrequenz das 2-fache der Pixelfrequenz ist.

8. Verfahren nach Anspruch 7, **dadurch gekennzeichnet, dass** in Schritt b3) die Beträge der beiden gemittelten Phasenparameter (θ*i, i=0,1) miteinander verglichen werden und aus dem Vergleich entschieden wird, welche der beiden Phasenlagen die bessere Phasenlage ist.

9. Verfahren nach Anspruch 8, **dadurch gekennzeichnet, dass** nachfolgend durch einen Vergleich des Betrages des gemittelten Phasenparameters (θ*i) der besseren Phasenlage mit einem Viertel des Betrages des gemittelten Phasenparameters (θ*k) der anderen Phasenlage entschieden wird, ob die Phasenlage verändert werden soll.

10. Verfahren nach einem der Ansprüche 1 bis 6, **dadurch gekennzeichnet, dass** die Abtastfrequenz das 3-fache der Pixelfrequenz ist.

11. Verfahren nach Anspruch 10, **dadurch gekennzeichnet, dass** in Schritt b3 in einem ersten Fall, in dem der gemittelte Phasenparameter (θ*0) der ersten Abtastung und der gemittelte Phasenparameter (θ*1) der zweiten Abtastung das gleiche Vorzeichen aufweisen und der gemittelte Phasenparameter (θ*2) der dritten Abtastung ein anderes Vorzeichen aufweist, die erste Abtastung als beste Abtastung gewählt wird,
in einem zweiten Fall, in dem die Vorzeichen aller Phasenparameter gleich sind, die zweite Abtastung als beste Abtastung gewählt wird,
in einem dritten Fall, in dem der Phasenparameter der zweiten und dritten Abtastung das gleiche Vorzeichen aufweisen und die erste Abtastung ein anderes Vorzeichen aufweist, die dritte Abtastung als beste Abtastung gewählt wird,
in einem anderen vierten Fall keine Änderung der Phasenlage erfolgt,
nachfolgend in dem ersten bis dritten Fall der Betrag des gemittelten Phasenparameters |θ*⇓| der besten Abtastung mit dem Grenzwert (S) verglichen wird und bei Erreichen des Grenzwert erkannt wird, dass ein Bild mit scharfen vertikalen Kanten vorliegt, und
die Beträge der beiden Phasenparameter der nicht besten Abtastungen miteinander verglichen werden, und der vom Betrag her kleinere Phasenparameter mit einem Viertel des Betrages des besten Phasenparameters verglichen wird und in Abhängigkeit von diesem Vergleich entschieden wird, ob eine Änderung der Phasenlage erfolgt.

12. Anordnung zur Durchführung eines Verfahrens nach einem der vorherigen Ansprüche, die mindestens folgende Bestandteile aufweist:

einen Signaleingang (18) für analoge Bildsignale,

einen Synchronisations-Separator (8) zum Erzeugen eines Referenz-Horizontal-Synchronisationssignal aus den analogen Bildsignalen,

einen phasengerasteten Regelkreis (10) zur Erzeugung eines Pixel-Taktsignals (pixclk) und eines Horizontal-Synchronisationssignals (Hsync) aus dem Referenz-Horizontal-Synchronisationssignal,

einen Analog-Digital-Wandler (7) zur Umwandlung der analogen Bildsignale in digitale Bildsignale (RGB) durch Abtastung mit einer n-fachen Pixelfrequenz,

eine Bildregeleinrichtung (11,12,13,14,15,16,17), die die digitalen Bildsignale, das Pixel-Taktsignal, das Horizontal-Synchronisationssignal aufnimmt, und Differenzen der Messwerte der Abtastung einer Testzeile benachbarter Pixel bildet und durch Summation dieser Differenzen Phasenparameter der verschiedenen Phasenlagen bildet, und aus den Phasenparametern eine Phasenlage des Bildsignals (G) ermittelt, einen Vergleich der ermittelten Phasenlage mit der eingestellten Phasenlage durchführt und auf Grundlage des Vergleichs die eingestellte Phasenlage ändert, wobei bei Nichtvorliegen eines Bildes mit scharfen vertikalen Kanten keine Änderung der eingestellten Phasenlage erfolgt.

13. Anordnung nach Anspruch 12, **gekennzeichnet durch** einen Tiefpassfilter (14) für eine Mittelung der Phasenparameter über mehrere Zeilen oder Frames und Ausgabe gemittelter Phasenparameter.

14. Anordnung nach Anspruch 12 oder 13, **gekennzeichnet durch** eine Detektionseinrichtung (12) zum Feststellen eines Beginns einer Testzeile.

15. Anordnung nach einem der Ansprüche 12 bis 14, **dadurch gekennzeichnet, dass** ein Phasenregister zum Speichern einer Phasenlage verschiedener Abtastungen vorgesehen ist.

## Claims

1. Method of converting analog picture signals into digital picture signals, comprising the following steps:

   a) a digital picture signal (RGB), a horizontal synchronisation signal (Hsync), and a pixel clock signal (pixclk) are obtained from an analog picture signal and a predetermined number of pixels per line,

   b) a phase position is determined from a test line of the digital picture signal by:

   b1) sampling the test line in the set phase position at a sampling frequency which is n times the pixel frequency, and determining with n phase positions a first to nth measured value of the picture signal for each pixel,

   b2) forming the differences of the first to nth measured values of two adjacent pixels and summing them over the test line to form first to nth phase parameters ($\theta i$, i=1-n),

   b3) determining the phase position from the phase parameters, wherein averaging of the phase parameters ($\theta i$, i=1-n) over multiple lines is carried out and averaged phase parameters ($\theta^*ik$) are formed, and on the basis of this averaging an assessment is made as to whether a picture with sharp vertical edges is present, and

   c) changing the set phase position as a function of the determined phase position, wherein if no picture with sharp vertical edges is present no change of the set phase position takes place.

2. Method as claimed in Claim 1, **characterised in that** the test line has an alternating sequence of bright and dark pixels.

3. Method as claimed in any one of the preceding claims, **characterised in that** a phase region of each sampling is described by a phase register and a change of the phase position takes place by increasing or decreasing the phase register by a predetermined value, preferably 1.

4. Method as claimed in Claim 3, **characterised in that** when a maximum value of the phase register is exceeded or when a value falls below a minimum value of the phase register the appropriate adjacent sampling is selected.

5. Method as claimed in any one of the preceding claims, **characterised in that** the averaging over the multiple lines is carried out by a low-pass filter, particularly a FIR low-pass filter.

6. Method as claimed in Claim 5, **characterised in that** the phase parameters ($\theta$*ik) are determined as a sum of the individual phase parameters ($\theta$ *kj, i=1=n, j=0-m-1).

7. Method as claimed in any one of the preceding claims, **characterised in that** the sampling frequency is twice the pixel frequency.

8. Method as claimed in Claim 7, **characterised in that** in step b3) the amounts of the two averaged phase parameters ($\theta$ *i, i=0, 1) are compared with one another and arising out of the comparison a decision is made as to which of the two phase positions is the better phase position.

9. Method as claimed in Claim 8, **characterised in that** subsequently by a comparison of the amount of the averaged phase parameter ($\theta$ *i) of the better phase position with a quarter of the amount of the averaged phase parameter ($\theta$ *k) of the other phase position a decision is made as to whether the phase position should be changed.

10. Method as claimed in any one of claims 1 to 6, **characterised in that** the sampling frequency is three times the pixel frequency.

11. Method as claimed in Claim 10, **characterised in that** step b3) in a first case, in which the averaged phase parameter ($\theta$ *0) of the first sampling and the averaged phase parameter ($\theta$ *1) of the second sampling have the same sign, and the averaged phase parameter ($\theta$ *2) of the third sampling has a different sign, the first sampling is selected as the best sampling,
in a second case, in which the signs of all the phase parameters are the same, the second sampling is selected as the best sampling,
in a third case, in which the phase parameter of the second and third samplings have the same sign and the first sampling has a different sign, the third sampling is selected as the best sampling,
in another fourth case, no change of the phase position takes place,
subsequently in the first to third case the amount of the averaged phase parameter $|\theta *\Downarrow|$ of the best sampling is compared with the limiting value (S), and when the limiting value is reached it is recognised that a picture with sharp vertical edges is present, and
the amounts of the two phase parameters of the non-best samplings are compared, and the phase parameter which is smaller in terms of the amount is compared with a quarter of the amount of the best phase parameter and as a function of this comparison a decision is made as to whether a change of the phase position takes place.

12. Apparatus for carrying out the method as claimed in any one of the preceding claims, having at least the following components:

a signal input (18) for analog picture signals,
a synchronisation separator (8) for generating a reference horizontal synchronisation signal from the analog picture signals,
a phase-locked loop (10) for generating a pixel clock signal (pixclk) and a horizontal synchronisation signal (Hsync) from the reference horizontal synchronisation signal,
an analog-to-digital converter (7) for converting the analog picture signals into digital picture signals (RGB) by sampling with an nth multiple of the pixel frequency,
a picture adjustment device (11, 12, 13, 14, 15, 16, 17) which picks up the digital picture signals, the pixel clock signal and the horizontal synchronisation signal, and forms differences between the measured values of the sampling of a test line of adjacent pixels and forms phase parameters of the different phase positions by summation of these differences, and determines a phase position of the picture signal (G) from the phase parameters, carries out a comparison of the determined phase position with the set phase position and on the basis of the comparison changes the set phase position as required, wherein when no picture with sharp vertical edges is present no change of the phase position takes place.

13. Apparatus as claimed in Claim 12, **characterised by** a low-pass filter (14) for averaging the phase parameters over multiple lines or frames and outputting the averaged phase parameters.

14. Apparatus as claimed in Claim 12 or 13, **characterised by** a detection device (12) for establishing a beginning of a test line.

15. Apparatus as claimed in any one of Claims 12 to 14, **characterised in that** a phase register is provided for storing one phase position of various samplings.

## Revendications

1. Procédé de conversion de signaux vidéo analogiques en signaux vidéo numériques, comportant les étapes suivantes:

   a) à partir d'un signal vidéo analogique et d'une quantité prédéfinie de pixels par ligne, on obtient un signal vidéo numérique (RGB), un signal de synchronisation horizontale (Hsynch) et un signal de rythme de pixels (pixclk),
   b) à partir d'une ligne de test du signal vidéo numérique, on détermine une position de phase, en ce que

   b1) dans une position de phase réglée, on balaye la ligne de test à une fréquence de balayage qui est un multiple-n de la fréquence pixel et on détermine une première jusqu'à une $n^{ème}$ valeur mesurée du signal vidéo pour chaque pixel, dans n positions de phase,
   b2) pour deux pixels voisins, on calcule respectivement des différences des premières jusqu'aux $n^{ème}$ valeurs mesurées, puis on les totalise sur la ligne de test pour former des premiers jusqu'à des $n^{ème}$ paramètres de phase ($\theta i$, i=1 - n),
   b3) à partir des paramètres de phase, on détermine la position de phase, la moyenne des paramètres de phases ($\theta i$, i=1 - n) étant calculée sur plusieurs lignes et des paramètres de phase moyens ($\theta^*ik$) étant calculés et sur la base de calcul de cette moyenne, on apprécie si l'on est en présence d'une image à arêtes verticales vives et

   c) en fonction de la position de phase déterminée, on procède à une modification de la position de phase réglée, aucune modification de la phase réglée n'étant effectuée si on n'est pas en présence d'une image à arêtes verticales vives.

2. Procédé selon la revendication 1, **caractérisé en ce que** la ligne de test comporte une séquence alternée de pixels clairs et foncés.

3. Procédé selon l'une quelconque des revendications précédentes, **caractérisé en ce qu'**une région de phase de chaque balayage est décrite par un registre de phase et **en ce qu'**on procède à une modification de la position de phase, par augmentation ou diminution du registre de phase d'une valeur prédéfinie, de préférence 1.

4. Procédé selon la revendication 3, **caractérisé en ce qu'**en cas de dépassement d'une valeur maximale du registre de phase ou en cas de non atteinte d'une valeur minimale du registre de phase, on opte pour le balayage voisin correspondant.

5. Procédé selon l'une quelconque des revendications précédentes, **caractérisé en ce que** la moyenne est calculée sur la pluralité de lignes par un passe-bas, notamment par un passe-bas FIR.

6. Procédé selon la revendication 5, **caractérisé en ce que** les paramètres de phase ($\theta^*ik$) sont déterminés en tant qu'une somme de paramètres individuels de phase ($\theta kj$ , i=1-n, j =0-m-1).

7. Procédé selon l'une quelconque des revendications précédentes, **caractérisé en ce que** la fréquence de balayage est le double de la fréquence pixel.

8. Procédé selon la revendication 7, **caractérisé en ce que** dans l'étape b3), les valeurs des deux paramètres de phase dont on a calculé la moyenne ($\theta^*i$, i=0, 1) sont comparées entre elles et on décide suite à cette comparaison laquelle des deux positions de phase est la meilleure position de phase.

9. Procédé selon la revendication 8, **caractérisé en ce qu'**ensuite, par comparaison de la valeur du paramètre de phase dont on a calculé la moyenne ($\theta^*i$) de la meilleure position de phase, avec un quart de la valeur du paramètre de phase ($\theta^*k$) dont on a calculé la moyenne de l'autre position de phase, on décide si la position de phase doit être modifiée.

10. Procédé selon l'une quelconque des revendications 1 à 6, **caractérisé en ce que** la fréquence de balayage est le triple de la fréquence pixels.

11. Procédé selon la revendication 10, **caractérisé en ce que** dans l'étape b3, dans un premier cas, dans lequel le paramètre de phase dont ont a calculé la moyenne ($\theta*0$) du premier balayage et le paramètre de phase dont on a calculé la moyenne ($\theta*1$) du deuxième balayage sont précédés du même signe et le paramètre de phase dont on a calculé la moyenne du troisième balayage ($\theta*2$) est précédé d'un autre signe, on opte pour le premier balayage en tant que meilleur balayage,

dans un deuxième cas, dans lequel tous les paramètres de phase sont précédés du même signe, on opte pour le deuxième balayage en tant que meilleur balayage,

dans un troisième cas, dans lequel le paramètre de phase du deuxième et du troisième balayage sont précédés du même signe et le premier balayage est précédé d'un autre signe, on opte pour le troisième balayage en tant que meilleur balayage,

dans un autre cas, le quatrième, on ne procède à aucune modification de la position de phase,

ensuite dans le premier au troisième cas, on compare la valeur du paramètre de phase dont on a calculé la moyenne $|\theta*\Downarrow|$ du meilleur balayage avec la valeur limite (S) et à l'atteinte de la $\Downarrow$ valeur limite, on identifie qu'on est en présence d'une image à arêtes verticales vives et

on compare entre elles les valeurs des deux paramètres de phase des balayages qui ne sont pas les meilleurs et on compare le paramètre de phase présentant la valeur la plus basse à un quart de la valeur du meilleur paramètre de phase et en fonction de cette comparaison, on décide si on procède à une modification de la position de phase.

12. Agencement pour la réalisation d'un procédé selon l'une quelconque des revendications précédentes, comportant au moins les composantes suivantes :

une entrée de signaux (18) pour des signaux vidéo analogiques,

un séparateur de synchronisation (8) pour générer un signal de synchronisation horizontale de référence à partir des signaux vidéo analogiques,

un circuit régulateur par phases (10) pour la génération d'un signal de rythmes de pixels (pixclk) et d'un signal de synchronisation horizontale (Hsync) à partir du signal de synchronisation horizontale de référence,

un convertisseur analogique/numérique (7) pour convertir les signaux vidéo analogiques en signaux vidéo numériques (RGB) par balayage à une fréquence pixels multipliée par n,

un dispositif de réglage d'image (11, 12, 13, 14, 15, 16, 17) qui enregistre les signaux vidéo numériques, le signal de rythme de pixels, le signal de synchronisation horizontale et qui calcule des différences entre les valeurs mesurées des balayages d'une ligne de test de pixels voisins et qui par totalisation de ces différences, forme des paramètres de phase pour les différentes positions de phase, et qui à partir des paramètres de phase détermine une position de phase du signal vidéo (G), qui procède à une comparaison de la position de phase déterminée avec la position de phase réglée et sur la base de la comparaison, modifie la position de phase réglée, en cas d'absence d'une image à arêtes verticales vives, aucune modification de la position de phase réglée n'étant effectuée.

13. Agencement selon la revendication 12, **caractérisé par** un filtre passe-bas (14) pour calculer une moyenne des paramètres de phase sur plusieurs lignes ou frames et pour éditer des paramètres de phase dont on a calculé la moyenne.

14. Agencement selon la revendication 12 ou 13, **caractérisé par** un dispositif de détection (12) pour constater le début d'une ligne de test.

15. Agencement selon l'une quelconque des revendications 12 à 14, **caractérisé en ce qu'**un registre de phase est prévu pour sauvegarder une position de phase de plusieurs balayages différents.

Fig. 1

Fig. 2

Fig. 3

Fig. 4

Fig. 5